# EUROPEAN PATENT SPECIFICATION

(11) **EP 3 758 896 B1**
(45) Date of publication and mention of the grant of the patent: **06.04.2022**
(21) Application number: 19712836.6
(22) Date of filing: 21.02.2019
(51) Int. Cl.: B25J 9/00

(54) **PROGRAMMABLE TRAJECTORY KINEMATIC SYSTEM**
KINEMATISCHES SYSTEM MIT PROGRAMMIERBARER TRAJEKTORIE
SYSTÈME CINÉMATIQUE DE TRAJECTOIRE PROGRAMMABLE

(30) Priority: 27.02.2018 IT 201800003065
(43) Date of publication of application: 06.01.2021
(73) Proprietor: G.D S.p.A., 40133 Bologna (IT)
(72) Inventor: SPIRITO, Gilberto, 40133 Bologna (IT); FEDERICI, Luca, 40135 Bologna (IT)
(74) Representative: Villanova, Massimo
(86) International application number: PCT/IB2019/051413
(87) International publication number: WO 2019/166923

(56) References cited:
- EP-A1- 1 637 277
- CN-B- 104 589 311
- DE-A1- 19 940 927
- US-A- 4 806 068
- US-A- 5 539 291
- US-A1- 2016 158 934
- US-B1- 6 497 548
- KRZYSZTOF MIANOWSKI: "Manipulator POLMAN-3*2 do zastosowan neurochirurgicznych", POMIARY AUTOMATYKA ROBOTYKA, 1 October 2004 (2004-10-01), pages 5-10, XP055523764,

## Description

### TECHNICAL FIELD

The present invention relates to a programmable trajectory kinematic system, in particular a kinematic system that is usable as a constructional element of a manipulating industrial robot.

The present invention can be used specifically but not exclusively in manipulating industrial robots suitable for the packaging sector, for example for packaging packets of cigarettes and/or electronic cigarettes.

### PRIOR ART

The prior art comprises programmable trajectory kinematic systems used as constructional elements of the so-called parallel robots, i.e. mechanical systems with a plurality of arms controlled by a computer for supporting and moving an end device ("end-effector").

In particular, the prior art comprises the Delta robot, a type of parallel robot that consists of three arms, each of which is driven by a respective actuator mounted on a base.

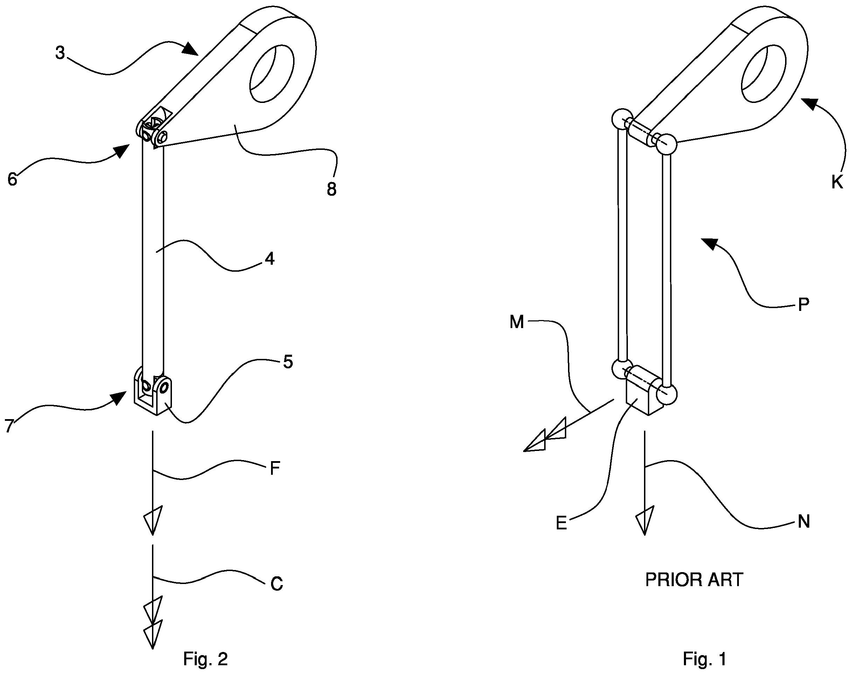

Figure 1 shows a single arm of a Delta robot, comprising an articulated parallelogram P in which one of the two short rods is coupled with a movable member K of the respective actuator, whereas the other short rod is coupled with the end device E (shown only partially in Figure 1).

The pair of long rods of the articulated parallelogram P, which extend between the respective movable member K and the end device E, can transmit an axial thrust N that is parallel to the longitudinal axis of the long rods and one torque M that is perpendicular to the aforesaid axis.

Composing a parallel robot with three arms of the type just disclosed requires the three axial thrusts N not to be coplanar and the three axial torques M to be in turn non coplanar: this greatly limits the obtainable final configuration.

**Patent publication** US 6 497 548 B1 **discloses a parallel kinematic system including three rotary actuators each with an actuator shaft.**

**Publication** KRZYSZTOF MIANOWSKI: "Manipulator POLMAN-3*2 do zastosowan neurochirurgicznych", POMIARY AUTOMATYKA ROBOTYKA, 1 October 2004, pages 5-10, XP055523764**, discloses a system as in the preamble of claim 1.**

### DESCRIPTION OF THE INVENTION

One object of the present invention is to find an alternative solution to the problem of devising a programmable trajectory kinematic system.

One advantage is to make available a kinematic system that is usable as a constructional element of a manipulating industrial robot.

One advantage is to provide a programmable trajectory kinematic system that is constructionally simple and cheap.

One advantage is to provide significant freedom and flexibility in positioning the actuators that drive the kinematic system and/or in orienting the rods that connect the actuators to the end device.

One advantage is to make a kinematic system that is drivable with actuators that are not arranged on moving parts of the kinematic system.

One advantage is to facilitate the configuration of the kinematic system with a desired number of degrees of freedom (variable from three to six).

One advantage is to improve the flexibility, the management of overall dimensions and the volume of work, without foregoing economies of scale.

One advantage is to provide a kinematic system that is easy to clean and sanitize, in particular owing to the use of joints that are protectable with suitable covering means (for example, sealed spherical guards or bellows).

One advantage is to give rise to a kinematic system provided with relatively high mechanical stiffness and/or with relatively low weight.

One advantage is to enable a parallel robot to be built with stiffness and/or a precision and/or a usable load that are better than the parallel robots, in particular the Delta robots, of the prior art.

One advantage is to obtain a kinematic system characterized by relatively reduced inertia variability, which permits, in particular, significant simplification of the parameterization of the motor-driven axes.

According to the present invention, a kinematic system is devised as in the attached claims. In one embodiment, the kinematic system may comprise three actuators, an end device connected to the three actuators, three rods, each of which has a longitudinal axis extending between a first end and a second end of the rod, wherein, for each rod, the first end is connected to a respective actuator by a first (Cardan) joint and the second end is connected to the end device by a second (Cardan) joint.

### BRIEF DESCRIPTION OF THE DRAWINGS

The present invention will now be disclosed with reference to the attached drawings that illustrate some embodiments thereof by way of non-limiting examples, in which:
- Figure 1 shows a portion of a kinematic system of a Delta robot made according to the prior art;
- Figure 2 shows a portion of a kinematic system made according to a first embodiment of the present invention;
- Figure 3 is a perspective view of a kinematic system, not made according to the present invention, that comprises the portion of kinematic system of Figure 2, in which the kinematic system is fitted to a base;

- Figure 4 shows the kinematic system of Figure 3 seen from a different perspective;
- Figures 5 to 7 show three different embodiments of arrangements in the space of three portions of kinematic system not made according to the present invention;
- Figures 8 and 9 show two different embodiments of kinematic systems of which only that of figure 8 is made according to the present invention.

### FEATURES OF EMBODIMENTS ACCORDING TO THE INVENTION AND EMBODIMENTS NOT ACCORDING TO THE INVENTION

In this description, analogous elements, common to the different embodiments illustrated, have been identified by the same numbering.

With 1, a programmable trajectory kinematic system has been identified overall that may be used as a constructional element of a manipulating industrial robot (in particular, a parallel robot).

The kinematic system 1 may comprise, in particular, three actuators 2 each of which drives at least one movable member 3. Each actuator 2 may be connected to the respective movable member 3 by a motion transmission system.

Each actuator 2 may be configured, in particular, to drive the respective movable member 3 with one degree of freedom or with two degrees of freedom.

Each actuator 2 may comprise, in particular, an actuator that is rotatable with a rotor connected to the respective movable member 3.

Each actuator 2 may comprise, for example, an electric motor, a hydraulic actuator, a pneumatic actuator etc.

The kinematic system 1 may comprise, in particular, for each actuator 2, a rod 4 extending along a longitudinal axis. Each rod 4 may be connected to the movable member 3 of the respective actuator 2. Each rod 4 may comprise, in particular, a longitudinal element with a constant (circular) straight cross section.

The kinematic system 1 may comprise, in particular, at least one end device 5 ("end effector") that is movable by the actuators 2. Each rod 4 may be connected to the end device 5.

The end device 5 may comprise, for example, any type of device or tool that is controllable by a manipulating industrial robot and/or is configurable for interacting with the environment.

The kinematic system 1 may comprise, in particular, for each rod 4, a first joint 6 to connect the respective rod 4 to the movable member 3 of the respective actuator 2.

The first joint 6 may be configured, in particular, to transmit at least one torque C between the respective rod 4 and the movable member 3 of the respective actuator 2; this torque C may be, in particular, parallel to the longitudinal axis of the respective rod 4.

The first joint 6 may be configured, in particular, to transmit at least one axial thrust F between the respective rod 4 and the movable member 3 of the respective actuator 2; this axial thrust F may be, in particular, parallel to the longitudinal axis of the respective rod 4; this axial thrust F may be, for example, transmitted in a coaxial or misaligned manner between the rod 4 and the movable member 3. The first joint 6 may comprise, as in these embodiments, a Cardan joint.

The kinematic system 1 may comprise, in particular, a second joint 7 to connect the respective rod 4 to the end device 5.

The second joint 7 may be configured, in particular, to transmit at least one torque C between the respective rod 4 and the end device 5; this torque C may be, in particular, parallel to the longitudinal axis of the respective rod 4.

The second joint 7 may be configured, in particular, to transmit at least one axial thrust F between the respective rod 4 and the end device 5; this axial thrust F may be, in particular, parallel to the longitudinal axis of the respective rod 4; this axial thrust F may be, for example, transmitted in a coaxial or misaligned manner between the rod 4 and the end device 5. The second joint 7 may comprise, as in these embodiments, a Cardan joint.

The longitudinal axis of each rod 4 may extend between the respective first joint 6 and the respective second joint 7.

It is noted that the joints 6 and 7 (Cardan joints) may be easily covered and protected by bellows or by seal spherical protections.

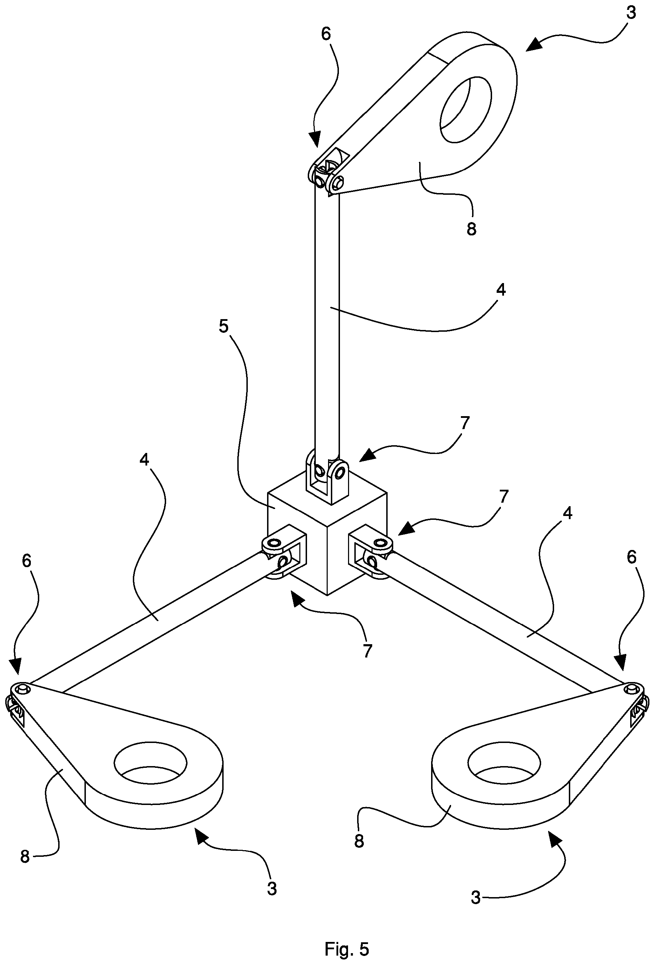

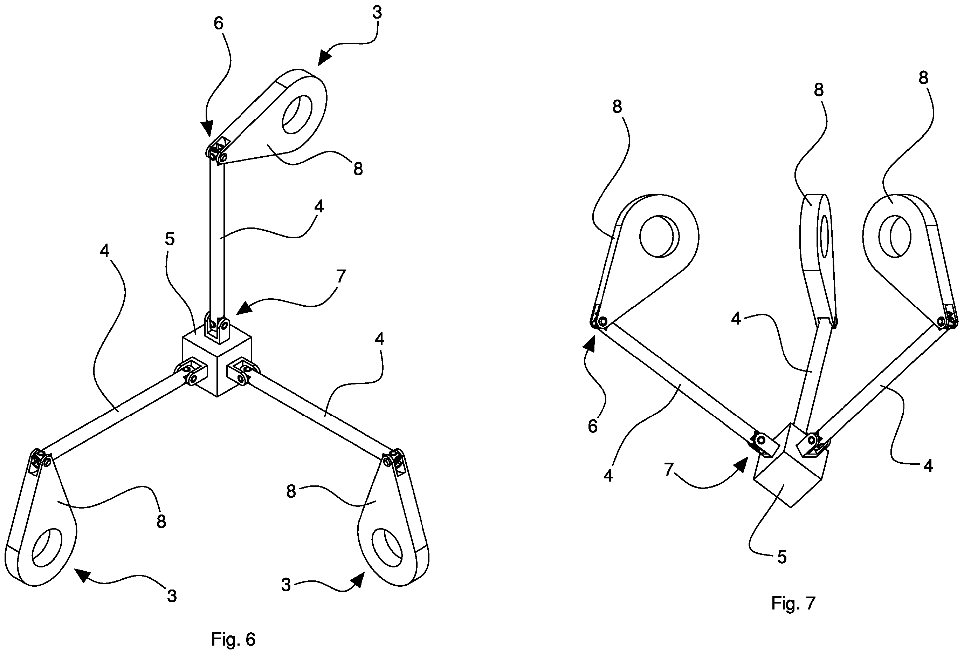

The movable member 3 may comprise, as in some embodiments illustrated here, for at least one actuator 2, or for two or more actuators 2, or for each actuator 2, at least one lever 8 with a first end that receives energy from the actuator 2 and a second end connected to the respective rod 4 by the respective first joint 6 (see embodiments of Figures 5 to 8). The first end of the lever 8 may be, as in these embodiments, rotatable around a rotation axis. This rotation axis of the lever 8 may be, in particular, transverse (orthogonal) to the longitudinal axis of the respective rod 4.

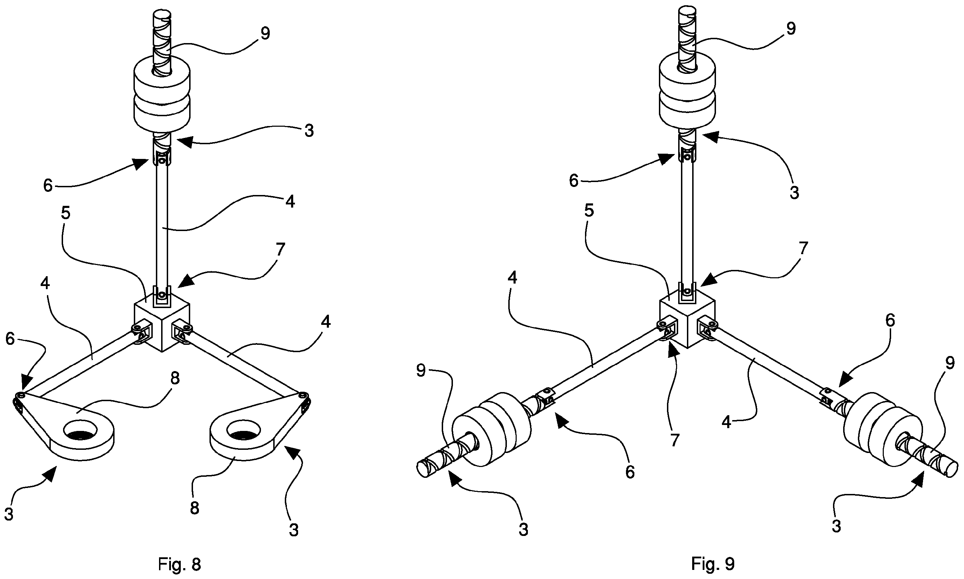

The movable member 3 may comprise, for at least one actuator 2, or for two or more actuators 2, or for each actuator 2, at least one shaft 9 provided with a combined rotary and translatory motion (see embodiments of Figures 8 and 9). The shaft 9 may comprise, in particular, an end connected to the respective rod 4 by the respective first joint 6.

The rotary-translatory motion of each shaft 9 may be made, as in these specific cases, by a rotary-translatory actuator, in particular of the screw type, like, for example, a ball screw, double groove screw (for example axial and helical), screws with two opposing helixes, a preassembled commercially available screw-spline, etc.

As in these embodiments, it may be provided for that at least one actuator 2 drives the respective movable member 3 with a motion comprising at least one rotation. In the specific embodiments illustrated here, it is provided that each of the three actuators 2 drives the respective movable member 3 with a motion comprising at least one rotation. The three rods 4 may be arranged, as in these embodiments, in such a manner that the longitudinal axes of the three rods 4, commanded by the respective three actuators 2, are not coplanar with one another.

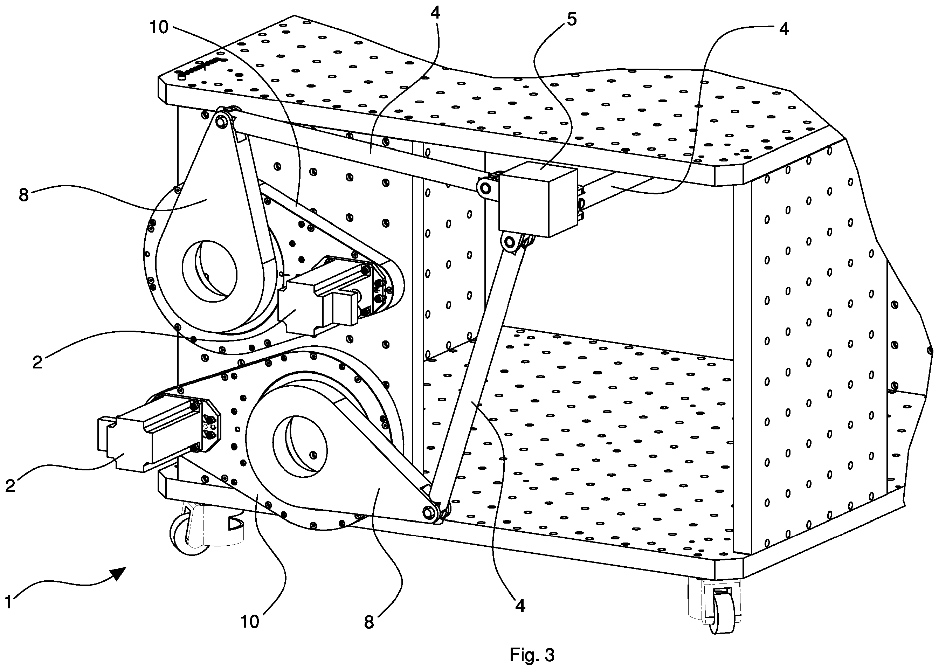

Each actuator 2 may be fixed to a respective base area 10. The three base areas 10 of the respective three actuators 2 may be integral with one another. The three base areas 10 may be arranged, in particular, on the same frame (in the embodiment of Figure 3, with a hollow frame with a complex shape that is dictated by the very different needs of the plant). The three base areas 10 may be arranged, in other examples, on distinct frames (in general integral with one another).

The kinematic system 1 may comprise, as in the embodiments disclosed here, three groups of elements, each of which includes an actuator 2, a rod 4, a first joint 6 (suitable for transmitting one torque C parallel to the rod 4) and a second joint 7 (suitable for transmitting one torque C parallel to the rod 4). The three groups of elements may be operationally associated with any type of end device 5.

The kinematic system 1 may consist, substantially, of a modular system that can be easily reconfigurable according to need. It should be observed, in particular, that for each actuator element the transmittable torque C may be aligned on the respective transmittable forces F, so the constraint of non coplanarity of the torque C is already implicit in constraint of non coplanarity of the torque F and does not accordingly impose further geometrical constraints.

The kinematic systems of Figures 5, 6 and 7 represent three embodiments of different possible configurations obtainable with three groups of the modular system, in which each group comprises a movable member 3 with a single degree of freedom.

The kinematic systems of Figures 8 and 9 represent two embodiments of different possible configurations obtainable with three groups of the modular system, in which at least one group comprises a movable member 3 with two degrees of freedom.

It is possible to provide other combinations, not illustrated, of configurations obtainable with three groups of the modular system, in which each group comprises a movable member 3 with one degree of freedom or with two degrees of freedom.

The modular system enables a great number of different configurations of programmable trajectory kinematic systems to be achieved in a practical way and with remarkable versatility.

The various rods 4 may be arranged, in particular, with orientations that are substantially perpendicular to one another.

In practice, the end device 5 may be connected to the three rods 4 by the three respective second joints 7 (for example Cardan joints).

Each rod 4 may comprise, in particular, a strut/tie rod that is able to work both in compression and traction.

Each rod 4 (strut/tie rod) may be maintained fixed with respect to the rotation and be pushed and/or pulled by a lever (for example like the lever 8).

Each rod 4 (strut/tie rod) may be commanded both to translate and to rotate through a rotary translating system (for example like the shaft 9).

The movable member 3 (with one or with two degrees of freedom) may be constrained on the respective rod 4 (strut/tie rod) by the first joint 3 (for example a Cardan joint).

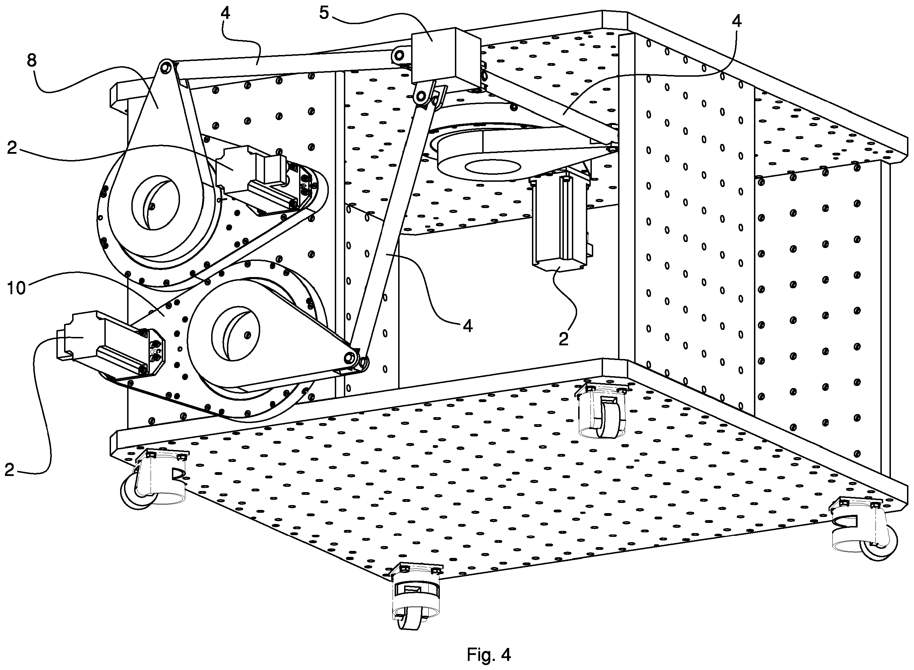

In the specific embodiment of Figures 3 and 4, the kinematic system 1 is fitted to a sole support base (that includes the three base areas 10). In other examples, which are not illustrated, a single base might not be provided for all three actuators 2, but the single actuators 2 may be arranged, each time, depending on the total mechanical dimensions and the various operating and/or assembly needs, near one another or on different supports (in general integral with one another).

It is also provided that the orientation angles of the rods 4 may vary with a certain freedom so as to enable the operating volume to be optimized each time.

It is observed, in particular, that the kinematic system 1 permits free composition of the degrees of freedom (which overall may vary from three to six) with a great possibility of different configurations.

It is possible to ensure that, whatever the chosen configuration, all the actuators 2 are not movable, i.e. fitted on movable parts of the kinematic system, but are fixed, with the consequence of offering numerous advantages such as, for example, reducing the moving masses, simplifying the various cables, carrying out replacements or maintenance in a non-invasive manner, etc.

In operation, movement is transmitted by the three actuators 2 to the end device 5 by three rods 4 (not coplanar with one another) stressed by torque (torque C) and by traction/compression (with axial thrust F transmitted coaxially or also misaligned). Transmission occurs, for each rod 4, through the two joints 6 and 7. In the specific embodiments they are two Cardan joints, although it is possible to use types that are equivalent to the Cardan joint, that are able to transmit both torque C (parallel to the longitudinal axis of the rod 4), and an axial thrust F (parallel to the longitudinal axis of the rod 4).

The rods 4 may be moved by actuators 2 of different type (with movements with one or two degrees of freedom). It is possible to provide different actuators 2 for the various rods 4 (as in the embodiment of Figure 8).

In general, it is possible to use, in practice, any possible combination of actuators with one or two degrees of freedom (for example an actuator with two degrees of freedom and two actuators with one degree of freedom, or one actuator with one degree of freedom and two actuators with two degrees of freedom), in combination with various possible different orientations of the rods, so the kinematic system enables a manipulating industrial robot to be obtained by a modular composition of at least two different types of actuator 2 with the three operating rods 4.

The kinematic system 1 can comprise, substantially, a driven member (i.e. the end device 5) moved by three driving members (i.e. the three rods 4), in turn driven by three actuators 2, in which the positioning of the driving members and the actuators can be distributed with significant freedom and versatility on as many base areas 10 or frame portions available.

The driven member (end device 5) can be moved within a work space that is suitable for performing the desired tasks, for example the operations required of a manipulating industrial robot.

## Claims

1. Kinematic system (1) comprising:
- three actuators (2) each of which drives a movable member (3);
- for each actuator (2), a rod (4) extended along a longitudinal axis and connected to the movable member (3) of the respective actuator (2);
- an end device (5) movable by the actuators (2), each rod (4) being connected to the end device (5);
- for each rod (4), a first joint (6) to connect the respective rod (4) to the movable member (3) of the respective actuator (2) and a second joint (7) to connect the respective rod (4) to the end device (5);
wherein:
- for at least one actuator (2), the movable member (3) comprises a shaft (9) that is provided with a combined rotary and translatory motion, the shaft (9) comprising at least one end that is connected to the respective rod (4) through the respective first joint (6);
- for each rod (4), the first joint (6) is configured to transmit at least one torque (C) that is parallel to the longitudinal axis of the respective rod (4) between the respective rod (4) and the movable member (3) of the respective actuator (2);
- for each rod (4), the second joint (7) is configured to transmit at least one torque (C) that is parallel to the longitudinal axis of the respective rod (4) between the respective rod (4) and the end device (5);
**characterized in that:**
- **for at least one actuator (2), the movable member (3) comprises a lever (8) with a first end that is rotatable about a rotation axis and a second end that is connected to the respective rod (4) through the respective first joint (6).**

2. Kinematic system according to claim 1, wherein the first joint (6) is configured to transmit at least one axial thrust (F), which is coaxial or misaligned, between the respective rod (4) and the movable member (3) of the respective actuator (2), said at least one axial thrust (F) being parallel to the longitudinal axis of the respective rod (4).

3. Kinematic system according to claim 1 or 2, wherein the second joint (7) is configured to transmit at least one axial thrust (F), which is coaxial or misaligned, between the respective rod (4) and the end device (5), said at least one axial thrust (F) being parallel to the longitudinal axis of the respective rod (4).

4. Kinematic system according to any one of the preceding claims, wherein the first joint (6) comprises a Cardan joint.

5. Kinematic system according to any one of the preceding claims, wherein the second joint (7) comprises a Cardan joint.

6. Kinematic system according to any one of the preceding claims, wherein said combined rotary and translatory motion is made by an actuator of the screw type.

7. Kinematic system according to claim 6, wherein for two actuators (2) the movable member (3) comprises said lever (8) and for the third actuator (2) the movable member (3) comprises said shaft (9) connected to said screw type actuator.

8. Kinematic system according to any one of the preceding claims, wherein at least one actuator (2) drives the respective movable member (3) with a motion comprising at least one rotation.

9. Kinematic system according to any one of the preceding claims, wherein the longitudinal axis of each rod (4) is extended between the respective first joint (6) and the respective second joint (7).

10. Kinematic system according to any one of the preceding claims, wherein at least one actuator (2) is configured to drive the respective movable member (3) with one degree of freedom.

11. Kinematic system according to any one of the preceding claims, wherein at least one actuator (2) is configured to drive the respective movable member (3) with two degrees of freedom.

12. Kinematic system according to any one of the preceding claims, wherein at least one actuator (2) comprises a rotational actuator with a rotor connected to the respective movable member (3).

13. Kinematic system according to any one of the preceding claims, wherein the longitudinal axes of the three rods (4) of the respective three actuators (2) are not co-planar with each other.

14. Kinematic system according to any one of the preceding claims, wherein each actuator (2) is fixed to a respective base area (10) and the three base areas (10) of the respective three actuators (2) are rigidly connected with each other.

15. Kinematic system according to any one of the preceding claims, comprising a modular system composed of at least two different types of actuator (2).

## Patentansprüche

1. Kinematisches System (1), mit:
- drei Aktuatoren (2), von denen jeder ein bewegliches Element (3) antreibt;
- einer Stange (4) für jeden Aktuator (2), die sich entlang einer Längsachse erstreckt und mit dem beweglichen Element (3) des betreffenden Aktuators (2) verbunden ist;
- einer Endeinrichtung (5), die von den Aktuatoren (2) bewegbar ist, wobei jede Stange (4) mit der Endeinrichtung (5) verbunden ist;
- einem Verbindungsgelenk (6) für jede Stange (4), um die betreffende Stange (4) mit dem beweglichen Element (3) des betreffenden Aktuators (2) zu verbinden, und mit einem zweiten Gelenk (7), um die betreffende Stange (4) mit der Endeinrichtung (5) zu verbinden;
wobei:
- für wenigstens einen Aktuator (2) das bewegliche Element (3) einen Schaft (9) aufweist, der mit einer kombinierten Dreh- und Translationsbewegung ausgestattet ist, wobei der Schaft (9) wenigstens ein Ende aufweist, das mit der betreffenden Stange (4) mittels des betreffenden ersten Gelenks (9) verbunden ist;
- wobei bei jeder Stange (4) das erste Gelenk (6) dazu ausgebildet ist, zwischen der betreffenden Stange (4) und dem beweglichen Element (3) des betreffenden Aktuators (2) ein Drehmoment (C) zu übertragen, das parallel zu der Längsachse der betreffenden Stange (4) ist;
- wobei bei jeder Stange (4) das zweite Gelenk (7) dazu ausgebildet ist, zwischen der betreffenden Stange (4) und der Endeinrichtung (5) wenigstens ein Drehmoment (C) zu übertragen, das parallel zu der Längsachse der betreffenden Stange (4) ist;
**dadurch gekennzeichnet, dass**
- bei wenigstens einem Aktuator (2) das bewegliche Element (3) einen Hebel (8) aufweist, mit einem ersten Ende, das um eine Drehachse verdrehbar ist, und mit einem zweiten Ende, das mit der betreffenden Stange (4) mittels des betreffenden ersten Gelenks (6) verbunden ist.

2. Kinematisches System nach Anspruch 1, bei dem das erste Gelenk (6) dazu ausgebildet ist, wenigstens einen axialen Schub (F), der koaxial versetzt ist, zwischen der betreffenden Stange (4) und dem beweglichen Element (3) des betreffenden Aktuators (2) zu übertragen, wobei der wenigstens eine axiale Schub (F) parallel zu der Längsachse der betreffenden Stange (4) ist.

3. Kinematisches System nach Anspruch 1 oder 2, bei dem das zweite Gelenk (7) dazu ausgebildet ist, wenigstens einen axialen Schub (F), der axial oder versetzt ist, zwischen der betreffenden Stange (4) und der Endeinrichtung (5) zu übertragen, wobei der wenigstens eine axiale Schub (F) parallel zu der Längsachse der betreffenden Stange (4) ist.

4. Kinematisches System nach irgendeinem der vorhergehenden Ansprüche, bei dem das erste Gelenk (6) ein Kardan-Gelenk umfasst.

5. Kinematisches System nach irgendeinem der vorhergehenden Ansprüche, bei dem das zweite Gelenk (7) ein Kardan-Gelenk aufweist.

6. Kinematisches System nach irgendeinem der vorhergehenden Ansprüche, bei dem die kombinierte Dreh- und Translationsbewegung von einem Aktuator des Schraubentyps gemacht wird.

7. Kinematisches System nach Anspruch 6, bei dem bei zwei Aktuatoren (2) das bewegliche Element (3) den Hebel (8) aufweist, und bei dem bei dem dritten Aktuator (2) das bewegliche Element (3) den Schaft (9) aufweist, der mit dem Aktuator des Schraubentyps verbunden ist.

8. Kinematisches System nach irgendeinem der vorhergehenden Ansprüche, bei dem wenigstens ein Aktuator (2) das betreffende bewegliche Element (3) mit einer Bewegung antreibt, die wenigstens eine Drehung umfasst.

9. Kinematisches System nach irgendeinem der vorhergehenden Ansprüche, bei dem die Längsachse von jeder Stange (4) sich zwischen dem betreffenden ersten Gelenk (6) und dem betreffenden zweiten Gelenk (7) erstreckt.

10. Kinematisches System nach irgendeinem der vorhergehenden Ansprüche, bei dem wenigstens ein Aktuator (2) dazu ausgebildet ist, das betreffende bewegliche Element (3) mit einem Freiheitsgrad anzutreiben.

11. Kinematisches System nach irgendeinem der vorhergehenden Ansprüche, bei dem wenigstens ein Aktuator (2) dazu ausgebildet ist, das betreffende bewegliche Element (3) mit zwei Freiheitsgraden anzutreiben.

12. Kinematisches System nach irgendeinem der vorhergehenden Ansprüche, bei dem wenigstens ein Aktuator (2) wenigstens einen Drehaktuator aufweist, bei dem ein Rotor mit dem betreffenden beweglichen Element (3) verbunden ist.

13. Kinematisches System nach irgendeinem der vorhergehenden Ansprüche, bei dem die Längsachsen der drei Stangen (4) der betreffenden drei Aktuatoren (2) nicht miteinander coplanar sind.

14. Kinematisches System nach irgendeinem der vorhergehenden Ansprüche, bei dem jeder Aktuator (2) an einem zugeordneten Basisbereich (10) befestigt ist, und wobei die drei Basisbereiche (10) der zugeordneten drei Aktuatoren (2) starr miteinander verbunden sind.

15. Kinematisches System nach irgendeinem der vorhergehenden Ansprüche, das ein modulares System aufweist, bestehend aus wenigstens zwei unterschiedlichen Arten von Aktuatoren (2).

## Revendications

1. Système cinématique (1) comprenant :
- trois actionneurs (2), dont chacun entraîne un élément mobile (3) ;
- pour chaque actionneur (2), une tige (4) étendue le long d'un axe longitudinal et reliée à l'élément mobile (3) de l'actionneur correspondant (2) ;
- un dispositif d'extrémité (5) mobile par les actionneurs (2), chaque tige (4) étant reliée au dispositif d'extrémité (5) ;
- pour chaque tige (4), un premier joint (6) pour relier la tige (4) correspondante à l'élément mobile (3) de l'actionneur (2) correspondant et un second joint (7) pour relier la tige (4) correspondante au dispositif d'extrémité (5) ;
dans lequel :
- pour au moins un actionneur (2), l'élément mobile (3) comprend un arbre (9) qui est doté d'un mouvement combiné rotatif et translatoire, l'arbre (9) comprenant au moins une extrémité qui est reliée à la tige (4) correspondante à travers le premier joint (6) correspondant ;
- pour chaque tige (4), le premier joint (6) est configuré pour transmettre au moins un couple (C) qui est parallèle à l'axe longitudinal de la tige (4) correspondante entre la tige (4) correspondante et l'élément mobile (3) de l'actionneur (2) correspondant ;
- pour chaque tige (4), le second joint (7) est configuré pour transmettre au moins un couple (C) qui est parallèle à l'axe longitudinal de la tige (4) correspondante entre la tige (4) correspondante et le dispositif d'extrémité (5) ;
**caractérisé en ce que** :
- pour au moins un actionneur (2), l'élément mobile (3) comprend un levier (8) avec une première extrémité qui est rotative autour d'un axe de rotation et une seconde extrémité qui est reliée à la tige (4) correspondante à travers le premier joint (6) correspondant.

2. Système cinématique selon la revendication 1, dans lequel le premier joint (6) est configuré pour transmettre au moins une poussée axiale (F) qui est coaxiale ou non alignée, entre la tige (4) correspondante et l'élément mobile (3) de l'actionneur correspondant (2), ladite au moins une poussée axiale (F) étant parallèle à l'axe longitudinal de la tige (4) correspondante.

3. Système cinématique selon la revendication 1 ou 2, dans lequel le second joint (7) est configuré pour transmettre au moins une poussée axiale (F) qui est coaxiale ou non alignée, entre la tige (4) correspondante et le dispositif d'extrémité (5), ladite au moins une poussée axiale (F) étant parallèle à l'axe longitudinal de la tige (4) correspondante.

4. Système cinématique selon l'une quelconque des revendications précédentes, dans lequel le premier joint (6) comprend un joint de cardan.

5. Système cinématique selon l'une quelconque des revendications précédentes, dans lequel le second joint (7) comprend un joint de cardan.

6. Système cinématique selon l'une quelconque des revendications précédentes, dans lequel ledit mouvement combiné rotatif et translatoire est réalisé par un actionneur de type vis.

7. Système cinématique selon la revendication 6, dans lequel pour deux actionneurs (2), l'élément mobile (3) comprend ledit levier (8) et pour le troisième actionneur (2), l'élément mobile (3) comprend ledit arbre (9) relié audit actionneur du type vis.

8. Système cinématique selon l'une quelconque des revendications précédentes, dans lequel au moins un actionneur (2) entraîne l'élément mobile (3) correspondant avec un mouvement comprenant au moins une rotation.

9. Système cinématique selon l'une quelconque des revendications précédentes, dans lequel l'axe longitudinal de chaque tige (4) est étendu entre le premier joint (6) correspondant et le second joint (7) correspondant.

10. Système cinématique selon l'une quelconque des revendications précédentes, dans lequel au moins un actionneur (2) est configuré pour entraîner l'élément mobile (3) correspondant avec un degré de liberté.

11. Système cinématique selon l'une quelconque des revendications précédentes, dans lequel au moins un actionneur (2) est configuré pour entraîner l'élément mobile (3) correspondant avec deux degrés de liberté.

12. Système cinématique selon l'une quelconque des revendications précédentes, dans lequel au moins un actionneur (2) comprend un actionneur rotatif avec un rotor relié à l'élément mobile (3) correspondant.

13. Système cinématique selon l'une quelconque des revendications précédentes, dans lequel les axes longitudinaux des trois tiges (4) des trois actionneurs (2) correspondants ne sont pas coplanaires les uns avec les autres.

14. Système cinématique selon l'une quelconque des revendications précédentes, dans lequel chaque actionneur (2) est fixé à une zone de base (10) correspondante et les trois zones de base (10) des trois actionneurs (2) correspondants sont rigidement reliées les unes aux autres.

15. Système cinématique selon l'une quelconque des revendications précédentes, comprenant un système modulaire composé d'au moins deux différents types d'actionneur (2).
